## Europäisches Patentamt

## European Patent Office

## Office européen des brevets

(19)

(11) Publication number: **0 072 642**
**B1**

(12) # EUROPEAN PATENT SPECIFICATION

(45) Date of publication of patent specification: **28.10.87**

(51) Int. Cl.⁴: **B 27 B 33/12, B 23 D 61/04**

(21) Application number: **82304049.8**

(22) Date of filing: **30.07.82**

(54) Saw blade.

(30) Priority: **13.08.81 US 292572**

(43) Date of publication of application:
**23.02.83 Bulletin 83/08**

(45) Publication of the grant of the patent:
**28.10.87 Bulletin 87/44**

(84) Designated Contracting States:
**AT BE CH DE FR GB IT LI LU NL SE**

(56) References cited:
**CH-A- 462 650**
**DE-A-2 141 939**
**DE-B-1 010 261**
**DE-B-1 042 873**
**DE-C- 887 701**
**DE-U-1 764 422**
**FR-A-2 127 795**
**US-A-1 711 102**
**US-A-2 649 868**
**US-A-4 135 421**

(73) Proprietor: **OMARK INDUSTRIES, INC.**
**2100 S.E. Milport Road**
**Portland, OR 97222 (US)**

(72) Inventor: **Scott, Lewis A.**
**19180 S.W. Indian Creek Avenue**
**Lake Oswego Oregon 97034 (US)**

(74) Representative: **Jones, Ian et al**
**POLLAK MERCER & TENCH High Holborn House**
**52-54 High Holborn**
**London WC1V 6RY (GB)**

Courier Press, Leamington Spa, England.

## Description

This invention relates to a saw blade comprising a generally circular body with a plurality of cutter teeth spaced around its periphery.

There is known from DE—B—10 10 261 a saw blade comprising a plurality of cutter teeth circumferentially spaced about the periphery thereof, the outer ends of the teeth being positioned to describe an arc at a first distance from the centre of rotation of the blade in use, and each peripheral edge portion of the blade between adjacent teeth extending through a first point adjacent the leading tooth at a second distance from the centre of rotation, and through a second point adjacent the trailing tooth, at a third distance from the centre of rotation, wherein the third distance exceeds the second distance but is less than the first distance.

The blade comprises a generally circular body centered on the centre of rotation, with the peripheral edge portions at the third radius being provided by short ramp members connected to one side of the body adjacent the leading edges of the teeth. This peripheral edge configuration between adjacent cutter teeth does not provide a smooth feeding operation. On a slowly rotating blade in particular, a bumpy or erratic operation could occur.

The invention accordingly provides a saw blade of the kind known from DE—B—10 10 261, characterised in that each edge portion of the blade between adjacent cutter teeth is defined by a circular arc from the point adjacent the leading tooth to the point adjacent the trailing tooth and having a centre offset from, but adjacent the centre of rotation.

The invention permits accurate control of the depth of cut, while producing smooth operation. The invention further permits a minimum number of cutter teeth to be positioned on the blade whilst providing control of the depth of cut of each tooth for smooth and efficient operation.

A saw blade embodying the invention can have hardened tips secured to the periphery of a body portion of a softer material, which may be so constructed that a portion of the body provides support for both the front and rear faces of the tip.

Also, a saw blade embodying the invention can have chip clearance channels for efficiently clearing chips from the periphery of the blade during operation, which channels are large enough to provide adequate chip clearance, yet small enough to inhibit entry of material of a size that may produce kickback.

The invention can thus be seen to provide a circular saw blade which operates efficiently and smoothly, yet may be produced economically with the minimum number of cutter teeth thereon.

For a better understanding of the invention, reference may be made to the following illustrative description and the accompanying drawings, in which:

Fig. 1 is a side elevation view of a circular saw blade embodying the invention; and

Fig. 2 is an enlarged illustration of a segment of the periphery and centre of the blade of Fig. 1.

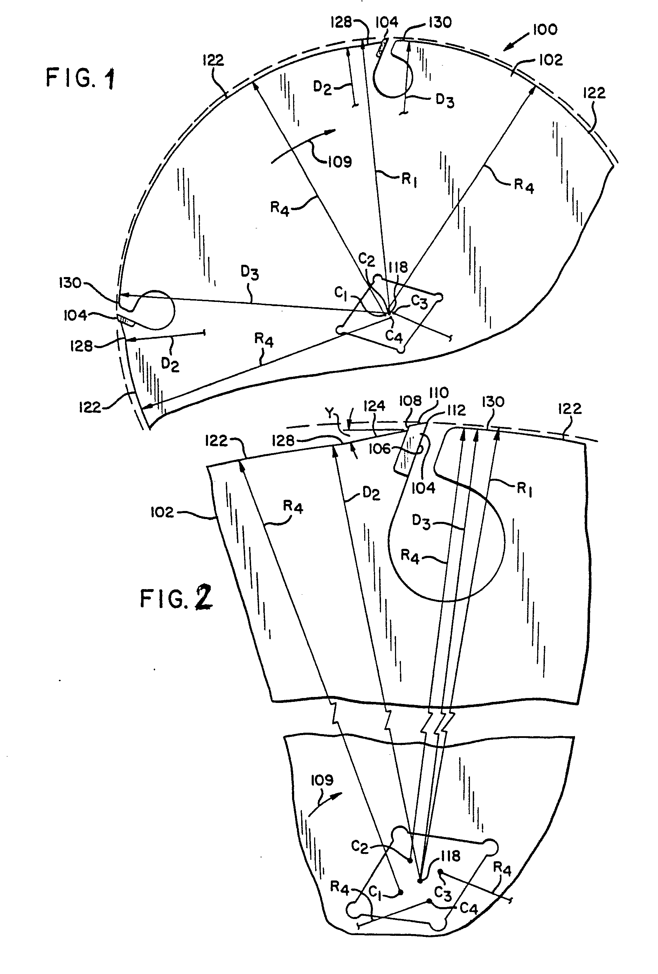

As shown in Figs. 1 and 2, a blade 100 embodying the invention includes a generally circular main body 102 having a plurality of circumferentially spaced cutter teeth or tips 104 arrayed about its periphery. The cutter tips 104 may be of a hardened material, such as carbide, and the body 102 is composed of a material of a lesser hardness, such as mild steel. The tips 104 may be secured to the body 102 by a conventional brazing procedure.

It will be seen from Fig. 2 that each tip 104 has front and rear facing surfaces 106, 108, respectively, with the front surface 106 facing in the direction of rotation 109 of the blade. The cutter tip 104 also has a radially outwardly facing top surface 110. The intersection between faces 106 and 110 forms an outer cutting edge 112. During operation of the blade cutting edge 112 describes an arc at a pre-selected first radius or distance designated as $R_1$, from the centre of rotation 118 of the blade.

The major portion 122 of the peripheral edge of the body 102 between adjacent tips 104 is formed as a low angle ramp surface providing a depth gauge or depth of cut control function. Referring to Fig. 2, it will be seen that a minor portion 124 of the peripheral edge is shaped to engage the cutter tip 104 rather high on its rear surface 108 to provide maximum support for the tip. The portion 124 drops away at an angle "Y" of approximately 10° relative to a tangent to the outer edge of the blade. A short distance rearwardly of the cutter tip, the peripheral edge reaches its low point at a first region 128 spaced a distance $D_2$ from the centre 118 of rotation. The peripheral edge on progressing toward the next following cutter tip (counterclockwise in Figs. 1 and 2) extends in a substantially continuously convex curve which increases in distance from the centre of rotation 118 until it reaches a maximum distance $D_3$ from this centre at a second region 130 adjacent the front face of the next cutter tip 104. This gradual ramping from a minimum distance $D_2$ to the maximum distance $D_3$ is produced by forming the peripheral edge as an arc of a circle having a radius $R_4$ and a centre point which is offset laterally, or radially, from the centre of rotation 118 of the blade. In Figs. 1 and 2, the centre points for four separate ramping segments between the four teeth on the blade are at $C_1$, $C_2$, $C_3$, $C_4$, respectively.

With this construction, a low angle ramping effect is provided intermediate adjacent cutter tips 104, with the highest region 130 of the peripheral edge being adjacent the front face of a cutter tip to provide the desired depth gauge clearance between the top of the peripheral edge surface and cutting edge 112 of the cutter tip. The depth gauge setting or difference between $R_1$ and $D_3$ may correspond to the depth gauge setting, or clearance, set out above for the previously-described embodiment. In summary, for a 12.7 cm to 38.1 cm (5 inch to 15 inch) diameter blade having from 0.063 to 0.394 teeth per circumferential centimetre (.16 to 1 teeth per circumferential inch) and operation at 3,000 to 6,000 rpm the difference between $R_1$ and $D_3$ may be in a range from 0.0076 cm to 0.058 cm (0.003 inch to 0.020 inch) and the difference between $D_3$ and $D_2$ may be in a range from 0.127 cm to 0.580 cm (0.050 inch to 0.200 inch).

As shown in Figs. 1 and 2, a chip clearance channel extends radially inwardly from the periphery of the body 102 along the forward surface of each cutter tip 104 to provide a pocket into which chips may be forced as they are cut from a work piece. This channel extends radially inwardly to a position considerably inward of the peripheral edge portion at radius $D_2$.

At the radially inward end the channel joins with an enlarged bore which extends fully through the body 102 and provides a larger region to accumulate chips prior to exit of the blade from a work piece.

Alternatively, the body 102 may have pockets formed therein with opposed, substantially parallel, edge margins and a bottom conforming to the configuration of the tip 104 to be mounted therein. The edge margins of the pocket thus formed provide support for a major portion of the length of both the front and rear faces of the tip 104 against movement circumferentially of the blade. By providing both front and rear support for the tip 104 there is less likelihood of its being broken or torn from its mounting in the body 102.

Chip clearing channels may then be constituted as indentations formed on opposite sides of the body 102 contiguous the front face of the tip 104. The indentations may lead radially inwardly to a chip accumulating bore similar to the previously described bore. It has been found that a saw blade with a diameter of 12.7 cm to 38.1 cm (5 inch to 15 inch) as described above works well with indentations having a depth of 0.025 cm to 0.102 cm (0.010 inch to 0.040 inch) as measured in a direction parallel to the axis of the blade.

The section of the body 102 separating the indentations forms a spine engaging the front face of the tip. It has been found that improved chip clearance is provided by inclining the outer edge of the spine radially inwardly at an acute angle to a tangent to the periphery of the blade on progressing forwardly from the tip 104. With the peripheral edge portions of the blade of the invention which act as depth gauge sections having smoothly curved surfaces, a smoothly operating, efficient blade is provided. The chip clearing channels provide for efficient clearing of chips from the periphery of the blade and can be constructed to minimize the occurrence of detrimental shock loads to the tip element. Provision of means for supporting both the front and rear surfaces of a cutter tip or element in the blade body minimizes tip breakage.

## Claims

1. A saw blade (100) comprising a plurality of cutter teeth (104) circumferentially spaced about the periphery thereof, the outer ends of the teeth being positioned to describe an arc at a first distance $(R_1)$ from the centre of rotation (118) of the blade in use, and each peripheral edge portion of the blade between adjacent teeth extending through a first point (128) adjacent the leading tooth at a second distance $(D_2)$ from the centre (118) of rotation, and through a second point (130) adjacent the trailing tooth at a third distance $(D_3)$ from the centre of rotation, wherein the third distance exceeds the second distance, but is less than the first distance, characterised in that each edge portion (122) of the blade between adjacent cutter teeth (104) is defined by a circular arc extending from the point adjacent the leading tooth to the point adjacent the trailing tooth and having a centre $(C_1, C_2, C_3, C_4)$ offset from, but adjacent to the centre (118) of rotation.

2. A saw blade as claimed in claim 1 wherein the first distance $(R_1)$ minus the third distance $(D_3)$ is in a range of 0.0076 cm to 0.058 cm.

3. A saw blade as claimed in claims 1 or 2 wherein the third distance $(D_3)$ minus the second distance $(D_2)$ is in a range of 0.127 to 0.580 cm.

4. A saw blade as claimed in claim 1, 2 or 3 wherein the second point (130) is spaced circumferentially of the blade no greater than 0.254 cm from the front surface of the adjacent tooth.

5. A saw blade as claimed in claim 1, 2, 3 or 4 having between the first point (128) and the adjacent tooth a minor peripheral edge portion (124) directed radially inwardly from the tooth.

6. A saw blade as claimed in claim 5 wherein the minor peripheral edge portion (124) is directed radially inwardly from the tooth at an angle of approximately 10° to the tangent at the end of the portion adjacent the tooth.

7. A saw blade as claimed in any preceding claim wherein each tooth (104) comprises a cutter tip secured in a pocket in a generally circular body (102) providing the peripheral edge portions of the blade.

8. A saw blade as claimed in claim 7 wherein the body (102) is composed of a material of a first hardness and the cutting tips (104) are composed of a material of a hardness greater than the first hardness.

9. A saw blade as claimed in any preceding claim having a chip clearance channel intermediate the front surface of each cutter tooth and the adjacent peripheral portion of the body, the channel extending generally radially inwardly from the peripheral portion.

10. A saw blade as claimed in claim 9 wherein each channel has a width measured circumferentially of the blade in a range of 0.076 cm to 0.254 cm.

11. A saw blade as claimed in claim 9 or 10 wherein the chip clearance channel has an enlarged bore extending through the body and at the radially inward end of the channel.

12. A saw blade as claimed in claim 7 or 8 wherein each pocket has edge margins which support the front and rear surfaces of the tip against movement circumferentially of the body.

13. A saw blade as claimed in claim 12 wherein the edge margins engage the tip throughout a major portion of the length of tip as measured radially of the blade.

14. A saw blade as claimed in claim 12 or 13 having a generally radially inwardly extending chip clearance channel at the front face of each cutter tip, the channel comprising an indentation in at least one side face of the body (102).

15. A saw blade as claimed in claim 14 wherein the portion of the body (102) in which the indentation is defined forms a tip-supporting spine, the radially outwardly facing surface of which spine on progressing forwardly from said front surface of the tip extends radially inwardly at an acute angle relative to a line tangent to the body periphery adjacent the tip.

16. A saw blade as claimed in claim 14 or 15 wherein the indentation has a depth measured in a direction extending parallel to the axis of the blade in a range of 0.025 cm to 0.102 cm.

17. A saw blade as claimed in claim 14, 15 or 16 wherein the chip clearance channel further comprises an enlarged bore extending through the body at the radially inward end of the or each indentation.

**Patentansprüche**

1. Sägeblatt (100), welches eine Mehrzahl von Scheidzähnen (104) aufweist, welche am Umfang desselben in Umfangsrichtung verteilt angeordnet sind, wobei die äußeren Enden der Zähne so positioniert sind, daß sie einen in einem ersten Abstand ($R_1$) vom Rotationszentrum (118) des in Betrieb befindlichen Blattes verlaufenden Bogen beschreiben und jeder Umfangsrandabschnitt des Blattes zwischen benachbarten Zähnen durch einen ersten Punkt (128), der dem vorauslaufenden Zahn benachbart liegt, in einem zweiten Abstand ($D_2$) vom Rotationszentrum (118) und durch einen zweiten Punkt (130), der dem nachlaufenden Zahn benachbart liegt, in einem dritten Abstand ($D_3$) vom Rotationszentrum verläuft, wobei der dritte Abstand größer als der zweite Abstand aber kleiner als der erste Abstand ist, dadurch gekennzeichnet, daß jeder Randabschnitt (122) des Blattes zwischen benachbarten Schneidzähnen (104) durch einen Kreisbogen begrenzt ist, der von dem dem vorauslaufenden Zahn benachbarten Punkt zu dem dem nachlaufenden Zahn benachbarten Punkt verläuft und dessen Mittelpunkt ($C_1$, $C_2$, $C_3$, $C_4$) gegen das Rotationszentrum versetzt, dem Rotationszentrum benachbart liegt.

2. Sägeblatt nach Anspruch 1, dadurch gekennzeichnet, daß die Differenz des ersten Abstandes ($R_1$) weniger dem dritten Abstand ($D_3$) im Bereich von 0,0076 cm bis 0,058 cm liegt.

3. Sägeblatt nach Anspruch 1 oder 2, dadurch gekennzeichnet, daß die Differenz des dritten Abstandes ($D_3$) weniger dem zweiten Abstand ($D_2$) im Bereich von 0,127 cm bis 0,580 cm liegt.

4. Sägeblatt nach Anspruch 1, 2 oder 3, dadurch gekennzeichnet, daß der zweite Punkt (130) in Umfangsrichtung des Blattes nicht weiter als 0,254 cm von der Vorderfläche des benachbarten Zahnes entfernt liegt.

5. Sägeblatt nach einem der Ansprüche 1, 2, 3 oder 4, dadurch gekennzeichnet, daß zwischen dem ersten Punkt (128) und dem benachbarten Zahn ein kleiner Umfangsrandabschnitt (124) liegt, der von diesem Zahn radial nach innen verläuft.

6. Sägeblatt nach Anspruch 5, dadurch gekennzeichnet, daß der kleine Umfangsrandabschnitt (124) unter einem Winkel von ungefähr 10° zu der am zahnseitigen Ende dieses Abschnittes gezogenen Tangente verläuft.

7. Sägeblatt nach einem der vorhergehenden Ansprüche, dadurch gekennzeichnet, daß jeder Zahn (104) eine Schneidspitze aufweist, welche in einer Tasche eines im wesentlichen kreisförmigen Körpers (102) befestigt ist, der die Umfangskantenabschnitte des Blattes bildet.

8. Sägeblatt nach Anspruch 7, dadurch gekennzeichnet, daß der Körper (102) aus einem Material einer ersten Härte besteht, und daß die Schneidspitzen (104) aus einem Material bestehen, dessen Härte größer ist als die erste Härte.

9. Sägeblatt nach einem der vorhergehenden Ansprüche, dadurch gekennzeichnet, daß es zwischen der Vorderfläche jedes Schneidzahnes und dem benachbarten Umfangsabschnitt des Körpers eine Spanabfuhrkanal aufweist, welcher Kanal sich im wesentlichen von diesem Umfangsabschnitt radial nach innen erstreckt.

10. Sägeblatt nach Anspruch 9, dadurch gekennzeichnet, daß jeder Kanal in Umfangsrichtung gemessen eine im Bereich von 0,076 cm bis 0,254 cm liegende Breite hat.

11. Sägeblatt nach Anspruch 9 oder 10, dadurch gekennzeichnet, daß der Spanabfuhrkanal am radial inneren Ende des Kanals eine größere Bohrung aufweist, die sich durch den Körper erstreckt.

12. Sägeblatt nach Anspruch 7 oder 8, dadurch gekennzeichnet, daß jede Tasche Randkanten aufweist, welche die Vorderfläche und Hinterfläche der Spitze gegen ein Bewegen in Umfangsrichtung des Körpers abstützen.

13. Sägeblatt nach Anspruch 12, dadurch gekennzeichnet, daß die Randkanten über einen größeren Abschnitt der Länge des Zahnes in Radialrichtung des Körpers gemessen mit den betreffenden Zahn in Eingriff stehen.

14. Sägeblatt nach Anspruch 12 oder 13, dadurch gekennzeichnet, daß es einen im wesentlichen radial nach innen sich erstreckenden Spanabfuhrkanal an der Vorderfläche jeder Schneidspitze aufweist, wobei dieser Kanal mindestens an einer Seitenfläche des Körpers (102) eine Vertiefung aufweist.

15. Sägeblatt nach Anspruch 14, dadurch gekennzeichnet, daß jener Abschnitt des Körpers (102), in dem sich die Vertiefung befindet, einen die Spitze tragenden Dorn bildet, dessen nach außen weisende Fläche sich nach vorne von der genannten Vorderfläche der Spitze fortschreitend in einem spitzen Winkel zu einer Tangentiallinie erstreckt, die in der Nachbarschaft dieser Spitze an den Körperumfang gelegt ist.

16. Sägeblatt nach Anspruch 14 oder 15, dadurch gekennzeichnet, daß die Vertiefung, in einer parallel zu Achse des Blattes verlaufenden Richtung gemessen, eine im Bereich von 0,025 cm bis 0,102 cm liegende Tiefe hat.

17. Sägeblatt nach Anspruch 14, 15 oder 16, dadurch gekennzeichnet, daß der Spanabfuhrkanal weiter eine größere Bohrung aufweist, die sich am radial inneren Ende der oder jeder Vertiefung durch den Körper erstreckt.

**Revendications**

1. Lame de scie (100) comprenant une pluralité de dentes de coupe (104) espacées circonférentiellement le long de sa périphérie, les extrémités extérieures des dents étant positionnées pour décrire un arc situé à une première distance ($R_1$) du centre de rotation (118) de la lame en utilisation, et chaque partie du bord périphérique de la lame comprise entre deux dents adjacentes passant par un premier point (128) adjacent à la dent avant et situé à une deuxième distance ($D_2$) du centre de rotation (118), et par un deuxième point (130) adjacent à la dent arrière et situé, à une troisième distance ($D_3$) du centre de rotation, dans laquelle la troisième distance est supérieure à la deuxième distance mais inférieure à la première distance, caractérisée en ce que chaque partie de bord (122) de la lame comprise entre deux dents de coupe adjacentes (104) est définie par un arc de cercle qui s'étend du point adjacent à la dent avant au point adjacent à la dent arrière et présente un centre ($C_1$, $C_2$, $C_3$, $C_4$) décalé par rapport au centre de rotation (118) mais adjacent à ce centre.

2. Lame de scie selon la revendication 1, dans laquelle la première distance ($R_1$), diminuée de la troisième distance ($D_3$), est comprise dans l'intervalle allant de 0,0076 cm à 0,058 cm.

3. Lame de scie selon la revendication 1 ou 2, dans laquelle la troisième distance ($D_3$), diminuée de la deuxième distance ($D_2$), est comprise dans l'intervalle allant de 0,127 à 0,580 cm.

4. Lame de scie selon la revendication 1, 2 ou 3, dans laquelle le deuxième point (130) est espacé de la surface avant de la dent adjacente d'une distance non supérieure à 0,254 cm selon la circonférence de la lame.

5. Lame de scie selon la revendication 1, 2, 3 ou 4, possédant, entre le premier point (128) et la dent adjacente, une petite partie de bord périphérique (124) dirigée radialement vers l'intérieur en partant de la dent.

6. Lame de scie selon la revendication 5, dans laquelle la petite partie de bord périphérique (124) est dirigée radialement vers l'intérieur à partir de la dent, en formant un angle d'environ 10° avec la tangente à l'extrémité de la partie adjacente à la dent.

7. Lame de scie selon une revendication précédente quelconque, dans laquelle chaque dent (104) comprend une mise de coupe rapportée fixée dans une poche formée dans un corps de forme générale circulaire (102) qui forme les parties de bord périphérique de la lame.

8. Lame de scie selon la revendication 7, dans laquelle le corps (102) est composé d'une matière possédant une première dureté et les mises de coupe rapportées (104) sont composées d'une matière d'une dureté supérieure à la première dureté.

9. Lame de scie selon une revendication précédentes quelconque, possédant une gorge de dégagement des copeaux entre la surface avant de chaque dent de coupe et la partie périphérique adjacente du corps, la gorge s'étendant à peu près radialement vers l'intérieur en partant de la partie périphérique.

10. Lame de scie selon la revendication 9, dans laquelle chaque gorge possède une largeur, mesurée selon la circonférence de la lame, comprise dans l'intervalle allant de 0,076 cm à 0,254 cm.

11. Lame de scie selon la revendication 9 ou 10, dans laquelle la gorge de dégagement de copeaux possède un perçage agrandi qui traverse le corps et est situé à l'extrémité radialement intérieure de la gorge.

12. Lame de scie selon la revendication 7 ou 8, dans laquelle chaque poche possède des bords qui donnent appui aux surfaces avant et arrière de la mise pour l'empêcher de se déplacer dans la direction circonférentielle du corps.

13. Lame de scie selon la revendication 12, dans laquelle les bords sont en contact avec la mise rapportée sur une majeure partie de la longueur de la mise, mesurée dans la direction radiale de la lame.

14. Lame de scie selon la revendication 12 ou 13, possédant une gorge de dégagement des copeaux qui s'étend sensiblement radialement vers l'intérieur au droit de la face avant de chaque mise de coupe rapportée, la gorge comprenant une indentation formée dans au moins une face latérale du corps (102).

15. Lame de scie selon la revendication 14, dans laquelle la partie du corps (102) dans laquelle l'identation est définie forme une épine dorsale qui donne appui à la mise rapportée, la surface de cette épine dorsale qui regarde radialement vers l'extérieur se dirigeant radialement vers l'intérieur, lorsqu'on avance à partir de ladite surface avant de la mise, en formant un angle aigu avec une ligne tangente à la périphérie du corps dans la région adjacente à la mise.

16. Lame de scie selon la revendication 14 ou 15, dans laquelle l'indentation possède une profondeur, mesurée dans une direction qui s'étend parallèlement à l'axe de la lame, comprise dans l'intervalle allant de 0,025 cm à 0,102 cm.

17. Lame de scie selon la revendication 14, 15 ou 16, dans laquelle la gorge de dégagement de copeaux comprend en outre un perçage agrandi qui traverse le corps à l'extrémité radialement intérieure de l'indentation ou de chaque indentation.

**0 072 642**

FIG. 1

FIG. 2